# EUROPEAN PATENT SPECIFICATION

(11) **EP 1 328 480 B1**
(45) Date of publication and mention of the grant of the patent: **11.08.2004**
(21) Application number: 01976642.7
(22) Date of filing: 11.10.2001
(51) Int. Cl.: C02F 9/00, C02F 1/32, C02F 1/76, C02F 1/00, B01D 33/21

(54) **MOBILE UNIT FOR FILTERING AND STERILIZING WATER**
MOBILE WASSERFILTRATIONS- UND STERILISATIONSANLAGE
UNITE MOBILE DE FILTRAGE ET DE STERILISATION DE L'EAU

(30) Priority: 20.10.2000 IT FI20000098 U
(43) Date of publication of application: 23.07.2003
(73) Proprietor: Sintec S.r.l., 06012 Citta' di Castello (IT)
(72) Inventor: MARSIGLIETTI, Luigi, I-06012 Città di Castello (IT); MILLI, Sergio, I-06012 Città di Castello (IT); CESARINI, Giorgio, I-06012 Città di Castello (IT)
(74) Representative: Bardini, Marco Luigi
(86) International application number: PCT/IT2001/000513
(87) International publication number: WO 2002/032814

(56) References cited:
- FR-A- 2 780 718
- FR-A- 2 804 105
- US-A- 5 817 231
- PATENT ABSTRACTS OF JAPAN vol. 018, no. 651 (C-1285), 9 December 1994 (1994-12-09) -& JP 06 254552 A (COSMO BIO:KK;OTHERS: 01), 13 September 1994 (1994-09-13)
- PATENT ABSTRACTS OF JAPAN vol. 1997, no. 12, 25 December 1997 (1997-12-25) -& JP 09 220558 A (KURASHINO JOHO CENTER:KK), 26 August 1997 (1997-08-26)
- PATENT ABSTRACTS OF JAPAN vol. 1999, no. 08, 30 June 1999 (1999-06-30) -& JP 11 077092 A (IWASAKI ELECTRIC CO LTD), 23 March 1999 (1999-03-23)
- PATENT ABSTRACTS OF JAPAN vol. 1997, no. 07, 31 July 1997 (1997-07-31) -& JP 09 066295 A (TORAY IND INC), 11 March 1997 (1997-03-11)

## Description

### Field of the invention

The present invention relates to the field of the apparatuses for water treatment. More precisely, it concerns a mobile unit for filtering and sterilizing water.

### Background art

Water must be filtered and sterilized, especially but not exclusively for conditioning requirements, in a number of different circumstances. The conditioning is required in particular whenever water has to be drawn from rivers, streams, (natural or artificial) basins or, more generally speaking, from rain deposits. The above, owing to the fact that a water distribution network is unavailable, or in any case unusable.

This may occur - for instance and typically - in isolated and/or underdeveloped areas, on the occasion of military operations/maneuvers, or further to natural disasters (earthquakes, floods etc.). However, the need for filtered and sterilized water may also arise in the agro-alimentary field, in zootechny, industry and in general for civil uses (water treatment for swimming pools, or for the accumulation of fall-back stocks).

In all such circumstances, and especially in those caused by an emergency, it is fundamental to satisfy the need that has arisen straightforwardly and promptly. Therefore, the filtering and sterilizing means to be used, besides providing a high efficiency in terms of quality of the treated water they deliver, must be very light, compact in size, easy to transport and to use in any condition, and adaptable to each specific circumstance of operation.

Filtering and sterilizing means having the above general characteristics are known from the prior art. For instance, JP 09220558 discloses a mobile unit for filtering and sterilizing water according to the pre-characterizing portion of appended claim 1.

### Summary of the invention

The object of the present invention is to provide a new mobile unit for filtering and sterilizing water which has the above cited characteristics, accomplishing an imporoved working efficiency.

The above object is achieved with the mobile unit for filtering and sterilizing water according to the present invention, whose essential features are defined in appended claim 1.

### Brief description of the drawings

The features and advantages of the mobile unit for filtering and sterilizing water according to the invention will become apparent from the following description of an exemplifying, non-limiting embodiment thereof, made with reference to annexed drawings, wherein:
- figure 1 shows is a perspective, exploded view of the unit according to the invention;
- figure 2 schematically represents the hydraulic lay-out of the unit of figure 1;
- figure 3 is an axial cross-section view of a filter of the unit of the previous figures.

### Description of the preferred embodiment

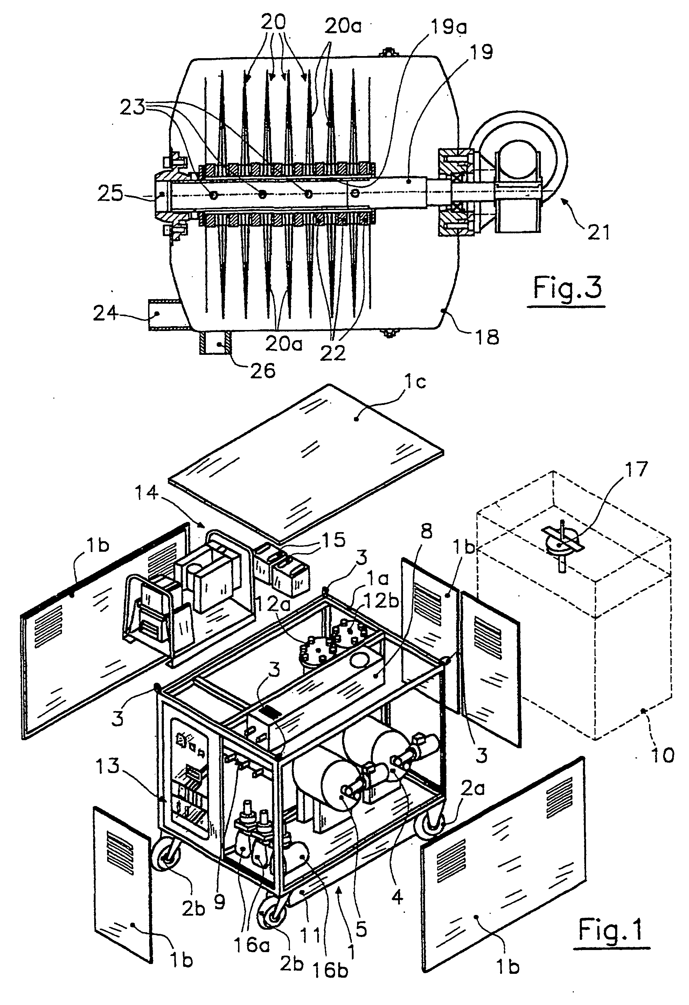

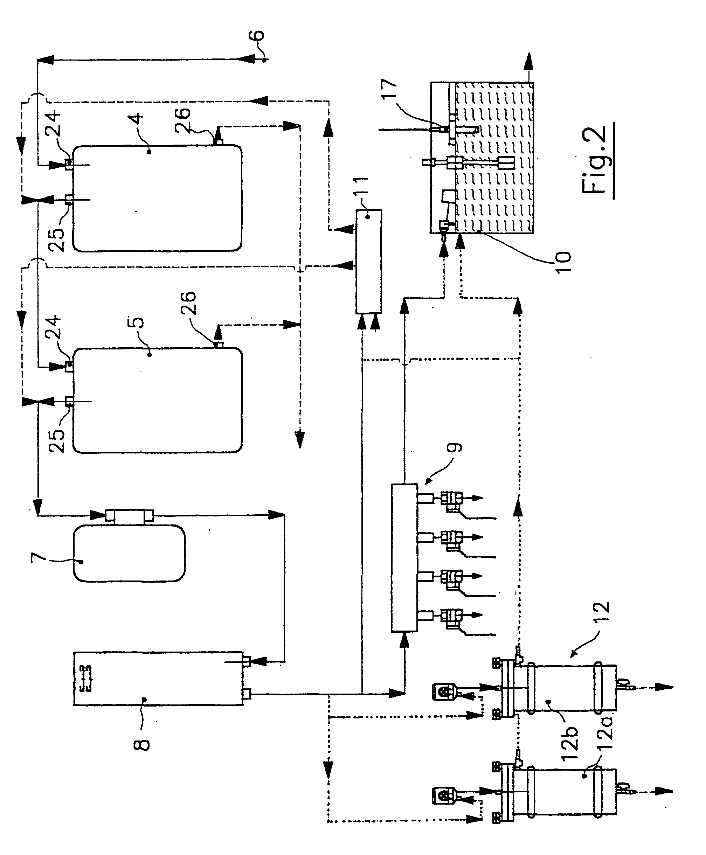

With reference to figures 1 and 2, the mobile unit according to the present invention comprises a loadbearing box-like structure 1, having a parallelepiped shape, defined by a frame 1a, side panels 1b and a cover panel 1c. The panels have thermal insulation properties, but provide vents for the aeration of the components housed within the structure.

Structure 1 is supported at the basis by two couples of wheels 2a and 2b, via connecting members which are fixed to the structure and swingable around a vertical axis, respectively for wheels 2a and 2b. In this way, the unit is easily displaceable on the ground. Structure 1 also provides hooks 3, protruding upwards, for taking hold of the unit and lifting it. The following main components are housed within structure 1, integrated in a water circuit not visible in figure 1, but schematically represented in figure 2 with a continuous line.

A couple of filters 4, 5 arranged in series, intercept an inflow 6 of water to be treated. Filters 4, 5 have different filtering effectiveness, namely lower for the upstream one and higher for the downstream one (typically, 16 µm and 5 µm). Downstream filters 4, 5, after a storage chamber 7, a U.V. irradiation sterilizing device 8 is provided. Device 8 is of the type, known per *se,* ensuring a total refraction of the irradiation and having inner tubes made of teflon™, such as those manufactured by the company ONLYTECH of Taranto (Italy). Such a device can afford a practically total (in percentage, around 99.99%) destruction of the bacteria in the water. Downstream device 8, a set of taps 9 is arranged, for delivering treated water to be used straightaway. Treated water may also be accumulated in a stocking tank 10, represented with shadow line in figure 1 too, to be externally associated to one side of structure 1.

An auxiliary tank 11 for the backwashing of the filters is arranged in correspondence to the base of structure 1, and fed by treated water drained off upstream taps 9. Tank 11 is hydraulically communicated with filters 4, 5 via a backwash circuit, shown with shadow line in figure 2. Finally, means 12 for diluting and dosing a disinfectant agent, typically chlorine based, in a solid condition are also fed by drained-off treated water.

According to the circuit sketched with dotted line, dosing means 12, preferably comprising two independent units 12a and 12b as shown in the figures, feed the disinfectant agent to backwash tank 11 and, if present, to stocking tank 10. In this way, the water accumulated in the tanks is protected by a possible contamination subsequent to the U.V. treatment. Advantageously, units 12a and 12b are of the kind described in Italian utility model application n. FI/99/U/000134, in the name of the same applicant. They may be associated to a dilution tank, not shown, in which the chlorine is further diluted in order to obtain, when necessary, a more refined dosing.

The auxiliary components, namely pumps and valves the function of which is to propel and control the water circulation in the unit, are not shown in figure 2. However, the arrangement of such components will be obvious to any skilled person. Nonetheless, pumps 16a and 16b for feeding the main and the backwash flows, respectively, are housed in the lower part of structure 1, and visible in figure 1.

The supply of electrical power to the unit, i. e. to filters 4, 5, to sterilizing device 8, to dosing means 12 and to the auxiliary components, is carried out by a diesel generator 14, shown in figure 1, located in the upper part of structure 1. At least one unit 12a of the dosing means 12 is also powered by batteries 15, placed near generator 14, so as to assure the chlorine-coverage of stocking tank 10 even when the same generator 14 is not working.

The control of the unit, that is of the operation of the above mentioned components, is carried out by a PLC system, of a known type, with a switchboard 13, as in figure 1, accessible on a side of structure 1. Switchboard 13 is advantageously provided with LED lights for the prompt identification of malfunctions and/or failures of the various components, and with one or more displays for showing the conditions of the treated water, typically of the chlorine-coverage level, detected in stocking tank 10 via sensors 17.

As to the features of filters 4 and 5, entering into details and referring also and in particular to figure 3, each filter comprises a cylindrical body 18, within which a shaft 19 extends axially. On shaft 19, which is driven by an electrical motor 21, a number of filtering disks 20 are keyed, being suitably spaced by sleeves 22. Each filtering disk 20 is made of a net-like material chosen with the appropriate fineness, and defines an inner cavity 20a, communicated via holes 23 with a passage 19a axially formed in shaft 19.

An inflow opening 24 of water to be treated and an outflow opening 25 of filtered water are axially formed in body 18, respectively in a off-center position and in a central one, i. e. in correspondence to shaft 19 and thus in a direct communication with passage 19a thereof. An outflow opening 26 to be used in the backwash operation of disks 20 is also formed, radially, in body 18. Said operation is carried out in the following way.

When one of the filters is spent, the water pressure thereinside overcomes a predetermined value. Such situation, thanks to a pressure switch, stops the filtering flow, the relevant inflows 24 of both filters 4, 5 being blocked. Then, filtered and sterilized water is fed from auxiliary tank 11 into body 18 of each filter, via opening 25 - an outflow in the normal operating conditions - and therefore through passage 19a of shaft 19.

Simultaneously, shaft 19 is driven, thus bringing filtering disks 20 into rotation. A centrifugal motion is then transmitted to the backwash water and this, along with the pressure of the same water, causes the removal of the solid particles from the outer faces of disks 20. The polluted water is removed via outflows 26 of the two filters. The above cited pressure switch will be also used to control the end of the backwash operation, and the restart of the normal work. As mentioned, the backwash water, besides being filtered, is sterilized and added with a disinfectant agent by means of dosing unit 12b, in order to eradicate the presence of bacteria inside filters 4, 5.

According to a different embodiment, not shown, the functions of the stocking tank 10 and of the auxiliary tank 11 for the backwash of the filters are carried out by a single tank, upstream taps 9. Such tank is then placed inside structure 1 and, in order to make room for it, generator 14 may be moved to the outside. Hence, the single tank has two outflows, one to the direct delivery to a user, the other to the backwash circuit. The tank may also be provided with a discharge valve, operated by the PLC system after a predetermined inactivity time (e.g. a few days) in order to get rid of water which has been stagnating for too long, and consequently is no longer protected by the chlorine-coverage.

In the single tank, the backwash outflow is placed in correspondence to the bottom and, thanks to a level gauge, the presence of an amount a water sufficient for the backwash of the filters is always assured. The delivery outflow is placed at a higher level, so that the said amount can not be affected. This solution, other than making the unit even more compact, makes it possible for the dosing means 12 to be totally integrated, this subtracting possibly troublesome mounting and test operations to the responsibility of the user.

It will be apparent from the above that the mobile unit according to the invention can satisfy the most critical filtering and sterilizing needs (of course, not those concerned with the depuration from chemical agents, for which other types of apparatuses are required). The working effectiveness of the unit has been confirmed also by severe tests that have been carried out. Namely, it was observed that undrinkable water, polluted by a TMC (TMC=total microbial count) of about 1100 cfu/ml (cfu=colony forming units), after the treatment had an average TMC of about 2 cfu/ml, with a reduction, in percentage, of about 99.8%. Such a final concentration is widely below the standards fixed by the law, this making the treated water, from a microbiological point of view, drinkable. Moreover, the microscopic observation of the sediments showed an adequate clarification of the water, due to the action of the filtering means.

As far as the sterilization is specifically concerned, it has to be noticed that the U.V. irradiation device 8 permits to destroy the bacteria in a ecological and safe way. The inner tubes made of teflon™ ensure substantially insignificant operation and maintenance costs, owing to their very high strength and for not needing cleaning operations.

As to the versatility and convenience of use, the features of the unit can be summarized as follows:
- very low size and weight, thus making the unit easy transportable and liftable, thanks to the simplicity of the components employed and to the rationality of their arrangement;
- possibility of a completely automatic operation, ensured by the PLC control system and the relevant network of sensors, this making the unit simply usable even by not qualified operators;
- modularity of the components, and then possibility of optimizing the size of the various parts and/or adding others (such as activated charcoal filters, remote control systems, fans/coolers for controlling the working temperature) as a function of the specific needs;
- excellent cost-benefit ratio;
- total autonomy, thanks to the diesel generator;
- absolute suitability for making water drinkable, thanks to a careful choice of the materials to be used (18/10 inox steel, polyethylene, etc.).

In conclusion, the mobile unit for filtering and sterilizing water according to the present invention provides a solution of unknown effectiveness to all the problems which arise in the circumstances mentioned in the introductory part.

Variations and/or modifications can be brought to the mobile unit for filtering and sterilizing water according to the present invention, without departing from the scope of the invention as defined in the appended claims.

## Claims

1. A mobile unit for filtering and sterilizing water comprising a water circuit with at least one inflow of water to be treated and at least one outflow of filtered and sterilized water, the unit further comprising, housed in a mobile box-like structure (1): filtering means (4, 5); U.V. irradiation sterilizing means (8), placed downstream said filtering means (4, 5); water delivery means (9), placed in correspondence to said at least one outflow of filtered and sterilized water; PLC means for automatically controlling said circuit and said sterilizing means (8); and electric power supply means (14), for making the operation of the unit autonomous, the unit being **characterized in that** it also comprises: means for backwashing said filtering means (4, 5), said backwashing means being provided with an auxiliary tank (11) for said treated and sterilized water, placed downstream said sterilizing means (8), said backwashing means being controlled by said PLC control means; and means (12) for dosing and diluting a disinfectant agent, typically chlorine based, in a solid condition into said auxiliary tank (11), said dosing means (12) being hydraulically fed by drained-off treated and sterilized water, and being controlled by said PLC control means.

2. The unit according to claim 1, comprising multiple filtering means (4, 5) arranged in series, having a progressively increasing filtering effectiveness.

3. The unit according to claim 1 or 2, further comprising battery means (15) for independently supplying electric power to said dosing and diluting means (12).

4. The unit according to any of the claims from 1 to 3, associated to a tank (10) for stocking said filtered and sterilized water, said stocking tank being fed with said disinfectant agent by said dosing means (12).

5. The unit according to any of the claims from 1 to 3, wherein said water delivery means (9) draw water from said auxiliary tank (11) of said backwashing means, said tank being also a stocking tank of filtered and sterilized water and comprising a discharge valve, operated by said PLC control means after a predetermined inactivity time.

6. The unit according to claim 5, wherein said tank comprises an outflow for the backwash of said filtering means (4, 5), placed near the bottom of the tank, and a outflow to said delivery means (9), the latter outflow being placed higher, above a water level corresponding to an amount a water which ensures the backwashing of the filtering means.

7. The unit according to any of the claims from 1 to 6, wherein said filtering means comprise at least one filter (4) comprising a body (18), a number of filtering disks (20) keyed to a shaft (19) axially extending within said body (18) and internally communicated with a passage (19a) centrally formed in said shaft (19), an inflow (24) and an outflow (25) of the water being axially formed in said body, respectively in an off-center position and in correspondence to said shaft (19), whereby a substantially radial filtering flow, from the outside to the inside, is established.

8. The unit according to claim 7, wherein said backwashing means feed treated and sterilized water from said auxiliary tank (11) to said body (18) of said at least one filter (4), according to a flow which is opposite to said filtering flow, an electric engine (21) electrically fed by said power supply means (14) and controlled by said PLC control means being associated to said shaft (18) for driving its rotation, whereby centrifugal motion is transmitted to said water, causing the removal of the solid particles from the outer faces of said filtering disks (20).

9. The unit according to any of the claims from 1 to 8, wherein said backwashing means are piloted by means for detecting the pressure within said filtering means (4, 5).

10. The unit according to any of the previous claims, wherein said electric power supply means (14) comprise a diesel generator (14).

## Patentansprüche

1. Mobile Einheit zum Filtern und Sterilisieren von Wasser, enthaltend einen Wasserkreislauf mit wenigstens einem Zufluss von Wasser, das zu behandeln ist, und wenigstens einem Abfluss von gefiltertem und sterilisiertem Wasser, welche Einheit ferner in einer mobilien kastenartigen Struktur (1) untergebracht enthält: Filtereinrichtungen, (4, 5); UV-Strahlungs-Sterilisiereinrichtungen (8), die stromabwärts der Filtereinrichtungen (4, 5) angeordnet sind; Wasserzuführeinrichtungen (9), die entsprechend zu dem wenigstens einen Abfluss von gefiltertem und sterilisiertem Wasser angeordnet sind; PLC-Einrichtungen zum automatischen Steuern des Kreislaufs und der Sterilisiereinrichtungen (8); und Elektrikleistungsversorgungseinrichtungen (14), um den Betrieb der Einheit autonom zu gestalten, welche Einheit **dadurch gekennzeichnet ist, dass** sie auch enthält: Einrichtungen zum Rückspülen der Filtereinrichtungen (4, 5), welche Rückspüleinrichtungen mit einem Hilfstank (11) für das behandelte und sterilisierte Wasser versehen sind, stromabwärts der Sterilisiereinrichtungen (8) angeordnet, welche Rückwascheinrichtungen durch die PLC-Steuereinrichtungen gesteuert werden; und Einrichtungen (12) zum Dosieren und Verdünnen eines Desinfektionsmittels, typischerweise chlorbasierend, in einem festen Zustand in den Hilfstank (11), welche Dosiereinrichtungen durch abgelassenes behandeltes und sterilisiertes Wasser hydraulisch versorgt werden und von den PLC-Steuereinrichtungen gesteuert werden.

2. Einheit nach Anspruch 1, enthaltend in Reihen angeordnete Mehrfachfiltereinheiten (4, 5), die eine progressiv zunehmende Filtereffektivität haben.

3. Einheit nach Anspruch 1 oder 2, ferner enthaltend Batterieeinrichtungen (15) zum unabhängigen Zuführen von elektrischer Leistung zu den Dosier- und Verdünnungseinrichtungen (12).

4. Einheit nach einem der Ansprüche 1 bis 3, verbunden mit einem Tank (10) zum Bevorraten des gefilterten und sterilisierten Wassers, welcher Vorratstank durch die Dosiereinrichtungen (12) mit dem Desinfektionsmittel versorgt wird.

5. Einheit nach einem der Ansprüche 1 bis 3, wobei die Wasserzuführeinrichtungen (9) Wasser von dem Hilfstank (11) der Rückwascheinrichtungen ziehen, welcher Tank auch ein Vorratstank von gefiltertem und sterilisiertem Wasser ist und ein Ausgabeventil enthält, das von den PLC-Steuereinrichtungen nach einer vorgegebenen Inaktivitätszeit betrieben wird.

6. Einheit nach Anspruch 5, wobei der Tank einen nahe dem Boden des Tanks plazierten Überlauf für die Rückwaschung der Filtereinrichtungen (4, 5) und einen Abfluss zu den Zuführeinrichtungen (9) enthält, welcher letzterer Abfluss höher über einem Wasserpegel entsprechend einer Wassermenge angeordnet ist, die das Rückwaschen der Filtereinrichtungen sicherstellt.

7. Einheit nach einem der Ansprüche 1 bis 6, wobei die Filtereinrichtungen wenigstens einen Filter (4) enthalten, der einen Körper (18) enthält, wobei eine Anzahl von Filterscheiben (20) auf eine Welle (19) geklemmt sind, die axial innerhalb des Körpers (18) verläuft, und intern mit einer Passage (19a) in Verbindung ist, die zentral in der Welle (19) ausgebildet ist, wobei ein Zufluss (24) und ein Abfluss (25) des Wassers axial in dem Körper jeweils in einer außermittigen Position und entsprechend der Welle (19) ausgebildet ist, wodurch eine im wesentlichen radiale Filterströmung von der Außenseite zur Innenseite eingerichtet ist.

8. Einheit nach Anspruch 7, wobei die Rückwascheinrichtungen behandeltes und sterilisiertes Wasser von dem Hilfstank (11) zu dem Körper (18) des wenigstens einen Filters (4) gemäß einer Strömung zuführen, die entgegengesetzt zur Filterströmung ist, wobei ein Elektrikmotor (21), der elektrisch von den Leistungsversorgungseinrichtungen (14) versorgt wird und von den PLC-Steuereinrichtungen gesteuert wird, mit der Welle (18) zum Antreiben ihrer Drehung verbunden ist, wodurch eine Zentrifugalbewegung auf das Wasser übertragen wird, was das Entfernen der festen Partikel von den Außenseiten der Filterscheiben (20) bewirkt.

9. Einheit nach einem der Ansprüche 1 bis 8, wobei die Rückwascheinrichtungen durch Einrichtungen zum Detektieren des Drucks innerhalb der Filtereinrichtungen (4, 5) gesteuert werden.

10. Einheit nach einem der vorhergehenden Ansprüche, wobei die Elektrikleistungsversorgungseinrichtung (14) einen Dieselgenerator (14) enthalten.

## Revendications

1. Une unité mobile de filtration et de stérilisation de l'eau comprenant un circuit d'eau avec au moins une entrée d'eau à traiter et au moins une sortie d'eau filtrée et stérilisée, l'unité comprenant en outre, logés dans une structure mobile (1) en forme de boîtier : des moyens de filtration (4, 5) ; des moyens de stérilisation par rayonnements U.V. (8), situés en aval des dits moyens de filtration (4, 5) ; des moyens de distribution d'eau (9), situés en correspondance avec au moins une sortie d'eau filtrée et stérilisée ; des moyens PLC pour contrôler automatiquement ledit circuit et lesdits moyens de stérilisation (8) ; et des moyens d'alimentation en énergie électrique (14), pour rendre autonome le fonctionnement de l'unité, l'unité étant **caractérisée en ce qu'**elle comprend en outre : des moyens de lavage à contre courant des dits moyens de filtration (4, 5), lesdits moyens de lavage à contre courant étant munis d'un réservoir auxiliaire (11) pour ladite eau traitée et stérilisée, situé en aval des dits moyens de stérilisation (8), lesdits moyens de lavage à contre courant étant contrôlés par lesdits moyens de contrôle PLC ; et des moyens (12) pour doser et diluer un agent désinfectant, typiquement à base de chlore, à l'état solide dans ledit réservoir auxiliaire (11), lesdits moyens de dosage (12) étant alimentés hydrauliquement par l'eau évacuée traitée et stérilisée, et étant contrôlés par lesdits moyens de contrôle PLC.

2. L'unité selon la revendication 1, comprenant des moyens de filtration multiples (4, 5) montés en série, ayant une efficacité de filtration augmentant progressivement.

3. L'unité selon l'une des revendications 1 et 2, comprenant en outre des moyens de batterie (15) pour alimenter en énergie électrique de façon indépendante lesdits moyens de dosage et de dilution (12).

4. L'unité selon l'une quelconque des revendications 1 à 3, associée à un réservoir (10) pour stocker ladite eau filtrée et stérilisée, ledit réservoir de stockage étant alimenté avec ledit agent désinfectant par lesdits moyens de dosage (12).

5. L'unité selon l'une quelconque des revendications 1 à 3, dans laquelle lesdits moyens de distribution d'eau (9) tirent l'eau à partir du dit réservoir auxiliaire (11) desdits moyens de lavage à contre courant, ledit réservoir étant aussi un réservoir de stockage d'eau filtrée et stérilisée et comprenant une soupape de vidange, actionnée par lesdits moyens de contrôle PLC après un temps prédéterminé d'inactivité.

6. L'unité selon la revendication 5, dans laquelle ledit réservoir comprend une sortie pour le lavage à contre courant des dits moyens de filtration (4, 5) située à proximité du fond du réservoir, et une sortie pour lesdits moyens de distribution (9), cette dernière sortie étant située à un niveau supérieur, au dessus d'un niveau d'eau correspondant à une quantité d'eau qui assure le lavage à contre courant des moyens de filtration.

7. L'unité selon l'une quelconque des revendications 1 à 6, dans laquelle lesdits moyens de filtration comprennent au moins un filtre (4) comprenant un corps (18), une pluralité de disques de filtration (20) clavetés sur un arbre (19) s'étendant axialement dans ledit corps (18) et communiquant intérieurement avec un passage (19a) centré sur ledit arbre (19), une entrée (24) et une sortie (25) de l'eau étant réalisées axialement dans ledit corps, respectivement dans une position excentrée et en correspondance avec ledit arbre (19), ce en quoi un flux de filtration sensiblement radial est établi, de l'extérieur vers l'intérieur.

8. L'unité selon la revendication 7, dans laquelle lesdits moyens de lavage à contre courant alimentent ledit corps (18) d'au moins un filtre (4) en eau traitée et stérilisée à partir du dit réservoir auxiliaire (11), suivant un flux qui est opposé au dit flux de filtration, un moteur électrique (21) alimenté en électricité par lesdits moyens d'alimentation en énergie (14) et contrôlé par lesdits moyens de contrôle PLC étant associé audit arbre (19) pour piloter sa rotation, ce en quoi le mouvement centrifuge est transmis à ladite eau, entraînant l'élimination des particules solides à partir des faces extérieures des dits disques de filtration (20).

9. L'unité selon l'une quelconque des revendications 1 à 8, dans laquelle lesdits moyens de lavage à contre courant sont pilotés par des moyens de détection de la pression dans lesdits moyens de filtration (4, 5).

10. L'unité selon l'une quelconque des revendications précédentes, dans laquelle lesdits moyens d'alimentation en énergie électrique (14) comprennent un générateur diesel.
